Europäisches Patentamt

European Patent Office

Office européen des brevets

(11) Veröffentlichungsnummer: **0 127 118**
**B1**

(12) # EUROPÄISCHE PATENTSCHRIFT

(45) Veröffentlichungstag der Patentschrift:
**11.05.88**

(21) Anmeldenummer: **84105851.4**

(22) Anmeldetag: **22.05.84**

(51) Int. Cl.⁴: **G 06 F 11/10**

(54) Speichersteueranordnung, insbesondere für fehlertolerantes Fernsprech-Vermittlungssystem.

(30) Priorität: **31.05.83 DE 3319710**

(43) Veröffentlichungstag der Anmeldung:
**05.12.84 Patentblatt 84/49**

(45) Bekanntmachung des Hinweises auf die Patenterteilung:
**11.05.88 Patentblatt 88/19**

(84) Benannte Vertragsstaaten:
**AT CH DE FR GB LI NL SE**

(56) Entgegenhaltungen:
DE - C - 2 655 653

IBM TECHNICAL DISCLOSURE BULLETIN, Band 24, Nr.
11B, April 1982, Seite 6122, New York, USA; D.R.
KAUFMAN: "Address error detection for memory using
SEC/DED with processor using byte parity error
detection"
IBM TECHNICAL DISCLOSURE BULLETIN, Band 15, Nr.
12, Mai 1973, Seite 3853, New York, USA; D.C. BOSSEN
et al.: "Intermittent error isolation in a double-error
environment"
IBM TECHNICAL DISCLOSURE BULLETIN, Band 10, Nr.
7, Dezember 1967, Seiten 934-937, New York, USA; R.J.
STANTON et al.: "Implied retention of byte parity bits
when using error-correcting codes"

(73) Patentinhaber: **Siemens Aktiengesellschaft Berlin und
München, Wittelsbacherplatz 2, D-8000 München 2 (DE)**

(72) Erfinder: **Knefel, Hans-Werner, Ing. grad.,
Kopernikusweg 10, D-8033 Martinsried (DE)**

(56) Entgegenhaltungen: (Fortsetzung)
IEEE TRANSACTIONS ON COMPUTERS, Band C-30, Nr.
10, Oktober 1981, Seiten 811-812, New York, USA; T.
KANAI: "An improvement of reliability of memory
system with skewing reconfiguration"
Bell System Technical Journal 26 (April 1956) Heft 2,
Seiten 147 bis 160
Firmenschrift Advanced Micro Devices, AM 2960 Series
Dynamic Memory Support Handbook, 1981, Seiten 1-44

## Beschreibung

Die Erfindung betrifft eine spezielle elektronische Anordnung, nämlich die im Oberbegriff des Patentanspruchs 1 definierte Speichersteueranordnung.

Die Erfindung wurde insbesondere für ein fehlertolerantes Fernsprech-Vermittlungssystem entwickelt, welches eine – im allgemeinen sogar mehrere – extrem zuverlässig verfügbare Zentralsteuereinheiten mit Speichern enthält, wobei Adressierfehler erkannt und Fehler, welche sich in die gespeicherten Speicherworte einschleichen, nach Möglichkeit nicht nur erkannt, sondern sogar selbsttätig korrigiert werden sollen. Bei diesen Speicherworten handelt es sich z.B. um in die Speicher eingeschriebene Belegungszustände, Anforderungen, Quittungen, Zuteilungen von Rufnummern zu Koppelfeldanschlüssen, Prioritätenüberwachungen, Startsignale für selbsttätige Überprüfungen usw. Die erfindungsgemässe Speichersteueranordnung ist jedoch grundsätzlich auch auf sonstige Speicher anwendbar, deren Betrieb gegen Fehler möglichst gut gesichert sein soll.

Die im Oberbegriff des Patentanspruchs 1 definierte spezielle Speichersteueranordnung ist für sich durch IBM Techn. Discl. Bull. 24 (April 1982) Heft 11B, Seite 6122 vorbekannt. Dieser von der Erfindung weitergebildete Stand der Technik gestattet für sich bereits, wie unten noch genauer erläutert werden wird,

– nicht nur das Speicherwort nach dem EDC-Prinzip (Error Detection and Correction), also vor allem nach einem Hamming-Code, insbesondere nach einem SEC-DED-Code (Single Error Correction – Double Error Detection) zu prüfen, um zumindest einen Einfachfehler des Speicherwortes zu korrigieren und Doppelfehler (sowie diverse sonstige Mehrfachfehler) dieses Speicherwortes zu erkennen, bzw. um bei erkannten Mehrfachfehlern dieses Speicherwortes einen Alarm oder eine Widerholung des Lesevorganges auszulösen,

– sondern auch die in Abschnitte unterteilte Adresse auf Fehler dahingehend zu überwachen, dass jedenfalls ein Einfachfehler und ungeradzahlige Mehrfachfehler in einem Abschnitt der Adresse zumindest mit hoher Wahrscheinlichkeit einen Alarm und/oder eine Wiederholung des Lesevorganges auszulösen,

– wobei der Aufwand an zusätzlichen Speicherplätzen zur Ermöglichung der Fehlersicherung der Adresse – im Vergleich zu dem Aufwand, der ohnehin zur Speicherung der Speicherworte und Paritätbits nötig ist – gering ist.

Bevor die besondere Betriebsweise der vorbekannten Anordnung zur Überprüfung der Adresse auf Fehlerfreiheit diskutiert wird, wird alleine auf die besondere Betriebsweise der vorbekannten Anordnung zur Überprüfung des Speicherwortes auf Fehlerfreiheit eingegangen:

Der genannte Stand der Technik benutzt zur Prüfung des Speicherwortes (nicht zur Prüfung der Adresse!) einen speziellen Hamming-Code, nämlich einen SEC-DED-Code, wobei es für solche SEC-DED-Codes im Prinzip viele Varianten gibt, vergleiche z.B. den Aufsatz von Hamming in Bell Syst. Techn. Journal 29 (1950) Heft 2, Seiten 147 bis 160. Hierbei wird das Speicherwort durch mehrere Paritätbits gesichert, indem jede Bitstelle des Speicherwortes jeweils in mehreren, sich überlappenden Abschnitten des Speicherwortes enthalten ist. Typischerweise wird jeweils ein eigenes Paritätbit für jeden der Abschnitte gebildet. Jeder so geprüfte Abschnitt des Speicherwortes enthält also in der Regel nur eine Untermenge der Bitstellen des Speicherwortes.

Zur Feststellung, ob ein Fehler des Speicherwortes beim Einschreiben, beim Speichern und/oder beim Auslesen auftrat, werden die beim Einschreiben erzeugten Paritätbits der Abschnitte mitabgespeichert. Ferner werden nach dem Lesen aus dem gelesenen Speicherwort erneut Paritätbits nach demselben Code ermittelt, wonach die gespeicherten Paritätbits und die erneut erzeugten Paritätbits miteinander verglichen werden; die Differenz zwischen den beiden verglichenen Paritätbitmustern bezeichnet man als «Syndrom» oder «Syndrommuster». Sind alle nach dem Lesen miteinander verglichenen Paritätbits jeweils identisch, liegt also ein «Nullsyndrom» vor, dann ist (mit hoher Wahrscheinlichkeit) das gelesene Speicherwort fehlerfrei. Tritt aber ein Syndrom auf, dann liegt sicher irgendein Fehler vor.

Tritt ein solches Syndrom auf, dann ist zur Diagnose des Fehlers nicht nur das gesamte entstehende Muster des Syndroms wichtig, sondern bereits die Anzahl der «I»-Bits in diesem Syndrom, – d.h. die Anzahl jener Stellen dieses Syndroms, in welchen diese «I»-Bits im Muster des Syndroms auftreten. Hierbei kann man noch geradzahlige Syndrome (= gerade Anzahl von «I»-Bits im Syndrom) und ungeradzahlige Syndrome (= ungerade Anzahl von «I»-Bits im Syndrom) unterscheiden.

Wenn jede einzelne Bitstelle des Speicherwortes zu einer ungeraden Anzahl von sich überlappenden Abschnitten gehört, wie es auch beim Stand der Technik üblich ist, dann entsteht, wenn ein Einfachfehler im Speicherwort vorliegt, ein ungeradzahliges elementares Syndrom = ungeradzahliges «Einzelsyndrom» aus einer ungeraden Anzahl von «I»-Bits. Bei einem Mehrfachfehler im Speicherwort entsteht demnach eine Überlagerung mehrerer solcher ungeradzahliger Einzelsyndrome. Diese Überlagerung ergibt schliesslich bei geradzahligen Mehrfachfehlern (Zweifach-, Vierfachfehlern usw.) normalerweise ein geradzahliges resultierendes Syndrom, aber besonders bei ungeradzahligen Mehrfachfehlern (Dreifach-, Fünffachfehlern usw.) normalerweise ein ungeradzahliges resultierendes Syndrom. Mitunter entstehen aber auch bei der Überlagerung der Einzelsyndrome in unangenehmer Weise zwei Arten von Diagnosefehlern: entweder entstehen noch relativ häufig ungeradzahlig resultierende Syndrome jener Art, die einen korrigierbaren Einfachfehler im Speicherwort vortäuschen, oder es entstehen mitunter jene Nullsyndrome, welche in diesem Fall die völlige Fehlerfreiheit des geprüften Speicherwortes vortäuschen. Jene die Korrigierbarkeit vortäuschenden Syndrome entstehen erfahrungsgemäss bei ungeradzahligen Vielfach-Fehlern im Speicherwort, also z.B. bei Dreifach- und Fünffachfehlern. Jene seltenen, die Fehlerfreiheit des Speicherwortes vortäuschenden Nullsyndrome entstehen bei geradzahligen Mehrfachfehlern im Speicherwort, also wenn eine gerade Anzahl von Einzelsyndromen überlagert wurde.

Weichen also die bei der Syndromfeststellung miteinander verglichenen Paritätbits der Speicherwortabschnitte zumindest teilweise voneinander ab, dann gestattet das jeweilige Muster des Syndroms, einen Einfachfehler im Speicherwort – meistens zwar nicht absolut sicher, aber mit hoher Wahrscheinlichkeit – nicht nur zu lokalisieren, sondern auch zu korrigieren. Ferner sind – im Regelfall alle – Zweifachfehler als solche aus dem Syndrommuster erkennbar, aber mangels präziser Lokalisierung (im allgemeinen) nicht mehr korrigierbar. Mehr-als-Zweifach-Fehler, also z.B. Dreifach-, Vierfach-, Fünffachfehler usw., sind mit hoher Wahrscheinlichkeit ebenfalls erkennbar, aber im Regelfall überhaupt nicht mehr lokalisierbar und daher nicht mehr einwandfrei korrigierbar.

Diese SED-DED-Codes gehören, wie bereits erwähnt, zu einer ganzen Familie ähnlicher Hamming-Codes, die zur Korrektur und Erkennung von Fehlern dienen. Es gibt nämlich sogar Hamming-Codes, durch welche auch Mehrfachfehler korrigiert werden können, vgl. den bereits erwähnten Aufsatz von Hamming in Bell Syst. Techn. Journal, ab Seite 154, z.B. die Tabelle 5 auf Seite 155.

Zur Paritätbits- und Syndrommustererzeugung einschliesslich automatischer Fehlerkorrektur und Fehleralarme kann z.B. ein nach einem speziellen SEC-DED-Code arbeitender Halbleiterbaustein aus der Familie der Bausteine Am2960 verwendet werden, welche dem Fachmann sehr gut bekannt sind und welche in hohen Stückzahlen vertrieben werden, vgl. z.B. die Firmenschrift AMD, AM2960 Series Dynamic Memory Support Handbook, 1981, z.B. Seiten 1 bis 44. Derartige Bausteine werden normalerweise so benutzt, dass jede Bitstelle des Speicherwortes zu einer ungeraden Anzahl von Abschnitten, nämlich mindestens zu drei – manchmal z.B. auch zu fünf – sich gegenseitig überlappenden Abschnitten gehört, so dass jede dieser Bitstellen Einfluss auf eine ungerade Anzahl von Paritätbits, also meistens zu drei (fünf) Paritätbits des resultierenden Syndroms aufweist. Die Anzahl der Paritätbiterzeugernetzwerke, deren Eingänge mit der Speicherzelle für eine Digitstelle des Speicherwortes verbunden werden, ist hierbei also jeweils endlich und ungeradzahlig, nämlich z.B. gleich drei, wodurch die Anzahl der Abschnitte, in welchen die betreffende Bitstelle des Speicherwortes enthalten ist, ebenfalls jeweils endlich und ungeradzahlig, also ebenfalls z.B. gleich drei ist.

Weil bei einem solchen Baustein Am2960 eine Bitstelle zu jeweils einer ungeraden Anzahl von Abschnitten gehört, entsteht bei Einfachfehlern dementsprechend ein ungeradzahliges Syndrom, d.h. ein Syndrommuster mit einer ungeraden Anzahl von «1»-Bits. Bei Mehrfachfehlern entsteht also auch bei einem solchen Baustein eine Überlagerung mehrerer derartiger ungeradzahliger Einzelsyndrome, wobei diese Überlagerung, wie bereits erläutert, entweder ein geradzahliges resultierendes Syndrom, oder ein ungeradzahliges resultierendes Syndrom, oder mitunter auch ein Nullsyndrom (= scheinbare Fehlerfreiheit) ergibt. Dieser Baustein ist ausserdem so aufgebaut und betreibbar, dass er einen erkannten Einfachfehler des Speicherwortes sofort korrigiert. Wenn hingegen der Baustein einen Mehrfachfehler erkennt, gibt er ein Alarmsignal ab, welches z.B. gestattet, den Lesevorgang zu wiederholen. Dieser Baustein erzeugt mitunter auch die oben beschriebenen Diagnosefehler bei Mehr-als-Zweifachfehlern auf, in denen er falsch korrigiert oder die Fehler nicht einmal erkennt.

Bisher wurde nur die Überprüfung des Speicherwortes auf Fehlerfreiheit betrachtet. Nun wird die Überprüfung der Adresse, unter der das Speicherwort eingeschrieben und danach gelesen wird, auf Fehlerfreiheit betrachtet:

Bei der bekannten Anordnung, welche dem Oberbegriff des Patentanspruchs 1 entspricht, wird aus jedem Abschnitt der Adresse ebenfalls ein eigenes Paritätbit erzeugt, wobei aber jede Bitstelle der Adresse jeweils nur zu einem einzigen Abschnitt gehört. Die hier aus drei Bytes bestehende Adresse ist in drei Abschnitte à ein Byte aufgeteilt. Die (beim Einschreiben in den Speicher) aus den Abschnitten der Adresse gebildeten drei Paritätbits werden zusammen mit den Bits des Speicherwortes und dessen Paritätbits gespeichert. Das beim Lesen aus den drei verglichenen Adress-Paritätbitpaaren gebildete Syndrom gestattet, bei Erkennen eines Adressfehlers einen Alarm auszulösen. Sehr unbefriedigend ist jedoch die geringe Zuverlässigkeit, mit welcher ein Fehler der Adresse durch Vergleich der dafür gespeicherten drei Paritätbits und der beim Lesen aus der Adresse gebildeten drei Paritätbits erkannt wird (Syndrom der Adresse): Bei einem geradzahligen Mehrfach-Fehler in einem Abschnitt der Adresse, d.h. also bei einem Zweifach-, Vierfach-, Sechsfachfehler usw. in diesem Abschnitt, wird nämlich aus dem Abschnitt ein scheinbar richtiges Paritätbit abgeleitet, so dass der betreffende Mehrfachfehler in dem betreffenden Abschnitt der Adresse nie erkannt wird. Nur Einfachfehler und ungeradzahlige Mehrfachfehler in einem Abschnitt der Adresse, also auch ihre Dreifachfehler, Fünffachfehler usw., werden erkannt.

In der DE-C-26 55 653 ist ebenfalls eine SEC-DED-gesicherte Speichersteuerungsanordnung beschrieben, die ähnlich wie die vorher genannte vorbekannte Anordnung augebaut und betrieben wird. Abweichend ist vor allem die Überprüfung der beim Einschreiben und Lesen verwendeten Adresse:

Gemäss der DE-C-26 55 653 wird aus der ganzen Adresse ein einziges Paritätbit gebildet. Das betreffende Paritätbit, das während des Einschreibens in den Speicher aus der Adresse gebildet wird, wird beim Einschreiben mit bestimmten der SEC-DED-Paritätbits des Speicherwortes so verknüpft, dass ein Einfachfehler oder ein ungeradzahliger Mehrfachfehler in jener Adresse, die beim späteren Lesen verwendet wird, normalerweise einen Doppelfehler im Speicherwort vortäuscht und Alarm auslöst, aber keine Korrektur auslöst – jedenfalls solange nur jene später verwendete Adresse verfälscht ist und nicht zusätzlich auch noch das betreffende Speicherwort. Beim Lesen wird nämlich aus der dafür verwendeten Adresse ebenfalls das Paritätbit gebildet und nach demselben Code mit einzelnen Paritätbits des Speicherwortes verknüpft. Vorteilhafterweise ist bei dieser Anordnung die Anzahl der insgesamt, zusammen mit dem Speicherwort, gespeicherten Paritätbits nur noch gleich der Anzahl der aus dem Speicherwort mit dem SEC-DED-Code gebildeten Paritätbits. Der Aufwand an Speicherkapazität ist also bei diesem Stand der Technik besonders gering. Besonders unbefriedigend ist jedoch die geringe Zuverlässigkeit, mit welcher ein Fehler der beim Einschreiben und/oder Lesen verwendeten Adresse (!) durch Vergleich der gespeicherten Paritätsbit und des beim Lesen aus der Adresse gebildeten Paritätbit entdeckt wird: Bei jedem geradzahligen Mehrfach-Fehler in der Adresse, d.h. also bei einem Zweifach-, Vierfach-, Sechsfachfehler usw. in der Adresse, wird nämlich aus der Adresse unmittelbar nur ein einziges Paritätbit abgeleitet, welches die Fehlerfreiheit der Adresse vortäuscht, so dass der betreffende geradzahlige Mehrfachfehler in der (zum Lesen oder zum Schreiben) verwendeten Adresse nicht erkennbar ist.

Die Aufgabe der Erfindung ist es, die Fehlersicherheit des Speichers weiter zu erhöhen, ohne den Aufwand stark zu erhöhen. Die Erfindung soll nämlich gestatten, den durch IBM Techn. Disc. Bull. gegebenen Stand der Technik weiter zu verbessern,
– um auch geradzahlige Mehrfachfehler – auch in einem beliebigen der Abschnitte – der Adresse zumindest mit einer gewissen Wahrscheinlichkeit erkennen zu können, selbst wenn ein Grossspeicher mit entsprechend hoher Anzahl von Bitstellen der Adresse verwendet wird,
– um besser – jedenfalls in ganz erheblichem Masse – zu vermeiden, dass ein Mehrfachfehler – besonders auch ein geradzahliger Mehrfachfehler – in der Adresse des Speicherwortes nicht erkannt wird oder dass ein korrigierbarer Speicherwort(einfach)fehler vorgetäuscht wird,
– wobei trotzdem der Aufwand für die Abspeicherung von Adressparitätbits, verglichen mit dem Aufwand, der für die Speicherung der Speicherworte und der dazugehörigen Paritätbits ohnehin nötig ist, niedrig sein soll, wobei nämlich z.B. oft sogar jedweder zusätzlicher Aufwand an Speicherzellen zur Speicherung von Adressparitätbits völlig unterbleiben kann.

Zur Vereinfachung der sprachlichen Formulierung wurden bisher und werden im folgenden stets «Bits», insbesondere «Paritätbits», statt allgemeiner «Digits» erwähnt, weil im Regelfall die Verwendung binärer Signale gegenüber Digits mit mehr als zwei Zuständen bevorzugt wird. Das Prinzip der Erfindung ist jedoch auch allgemein auf Speicherworte, Adressen und Paritätangaben anwendbar, welche aus Digits statt aus Bits bestehen. In der vorliegenden Beschreibung werden also vor allem Beispiele mit binären Digits, also Bits, erläutert.

Die Aufgabe der Erfindung wird durch die im Patentanspruch 1 definierten Massnahmen gelöst. Bei der Erfindung wird also das bekannte EDC-Prinzip in abgewandter Form auch auf jene Adressen angewendet, unter welchen die Informationen abgespeichert sind. Bei der Erfindung gehört jede Bitstelle der Adresse zu einer endlichen geraden (!) Anzahl von sich überlappenden Adressabschnitten, also zumindest zu zwei solchen Abschnitten der Adresse. Dann entstehen bei einem Einfachfehler in der Adresse ein geradzahliges Syndrom und bei Mehrfachfehlern in der Adresse Überlagerungen mehrerer solcher geradzahliger Einzelsyndrome, wobei diese Überlagerungen meistens wieder geradzahlige resultierende Syndrome, mitunter allerdings auch Nullsyndrome, ergeben. Weil bei dieser Überlagerung aber kein ungeradzahliges Syndrom entsteht, werden beliebige Einfachfehler und beliebige Mehrfachfehler in der Adresse nie einen korrigierbaren Fehler in der Adresse vortäuschen. Einfachfehler oder Mehrfachfehler in der Adresse werden also im Regelfall erkannt, bis auf die relativ wenigen Fälle, in welchen bei bestimmten Mehrfachfehlern Nullsysteme entstehen. Bei der Erfindung wird also ein Fehler in der Adresse im allgemeinen entdeckt und überdies nie korrigiert.

Die in den Unteransprüchen angegebenen Weiterbildungen gestatten zusätzliche Vorteile, nämlich die Massnahme gemäss Patentanspruch 2, keine zusätzlichen Speicherzellen zur Speicherung der Paritätdigits bzw. Paritätbits der Adresse zu benötigen, 3, den zusätzlichen Aufwand an Paritätdigit- bzw. Paritätbiterzeugern zur Bildung der Paritäten der Adresse auf Null reduzieren zu können, 4, mit jeweils drei sich überlappenden Abschnitten pro Bitstelle des Speicherwortes und damit mit besonders wenigen Paritätbiterzeugern, zur Erzeugung der einzuspeichernden Paritätbits der Adresse und des Speicherwortes und zur Erzeugung der beim Lesen benötigten Paritätbits der Adresse, im Idealfall auszukommen, sowie 5, käufliche Bausteine, welche eine Fehlererkennungs- und -korrekturschaltung enthalten, statt speziell entwickelte Sonderschaltungen dieser Art verwenden zu können.

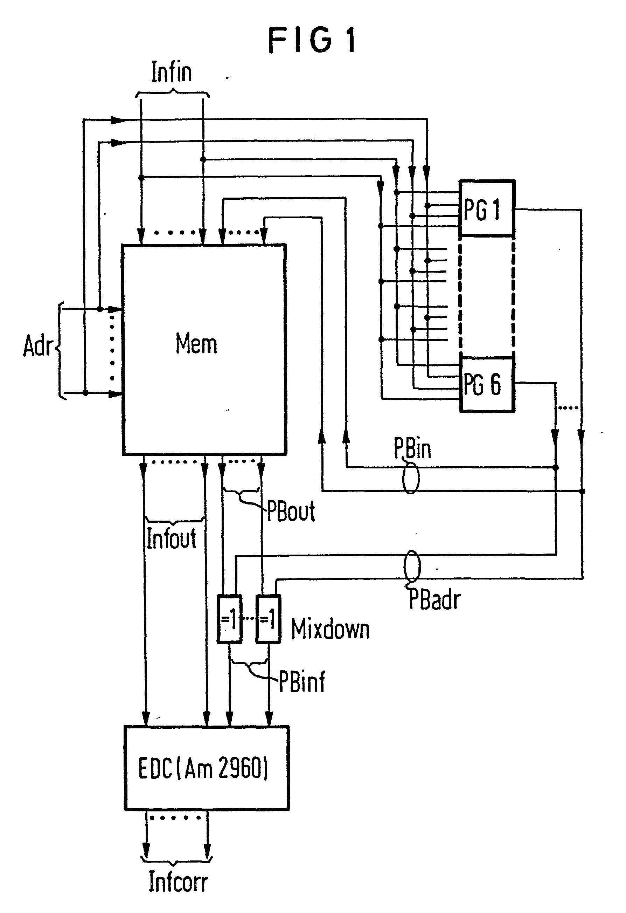

Die Erfindung und Weiterbildungen derselben werden anhand der in den beiden Figuren gezeigten Ausführungsbeispiele noch detaillierter beschrieben, wobei Figur 1 ein aus käuflichen Bausteinen herstellbares, der Übersichtlichkeit wegen nur grob skizziertes Ausführungsbeispiel der Erfindung, sowie 2 ein auf Figur 1 zugeschnittenes Beispiel für die Verbindungen der verschiedenen Paritätbiterzeugereingänge mit den jeweiligen Speicherzellen der betreffenden Bitstellen der Adresse und des Speicherwortes zeigen.

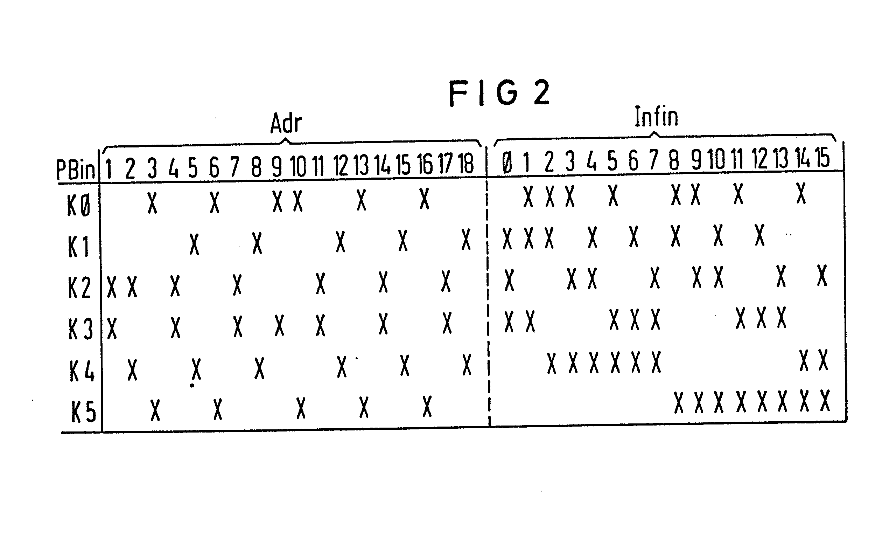

Das in Fig. 1 gezeigte Beispiel einer erfindungsgemässen Speichersteueranordnung dient zur Feststellung der Fehlerfreiheit der Adresse Adr und nicht nur zur Feststellung der Fehlerfreiheit sondern nach Möglichkeit auch zur Korrektur des Speicherwortes Infout, beim Lesen dieses Speicherwortes Infout aus einem Speicher Mem. Zur Überprüfung des gelesenen Speicherwortes Infout wird dieses gelesene Speicherwort Infout und in der gleichen Weise das einzuschreibende Speicherwort Infin, also das Speicherwort, in mehrere sich überlappende Abschnitte eingeteilt, wobei ein solcher Abschnitt des aus Bits gebildeten Speicherwortes Infin, Infout in der Regel jeweils nur eine, z.B. durch eine Maske gebildete, Untermenge der Bitstellen dieses Speicherwortes Infin, Infout erfasst; – vgl. das in Fig. 2 gezeigte konkrete Beispiel dafür, worin die hier sechs sich überlappenden Abschnitte des hier 16stelligen Speicherwortes durch «X»-Zeichen in den erfassten Untermengen markiert sind. Das Speicherwort Infin, Infout ist bei dem in Fig. 2 gezeigten Beispiel abschnittsweise nach einem der für sich bekannten SEC-DED-Verfahren durch Paritätbits gesichert, indem jede Bitstelle des Speicherwortes Infin, Infout in dieser Weise jeweils in mehreren sich überlappenden Abschnitten des Speicherwortes enthalten ist, vgl. z.B. AMD, Am2960 Series Dynamic Memory Support Handbook 1981, S. 1 bis 44, insb. Table IV auf S. 15, Table X auf S. 18 und andere Beispiele z.B. in Table XII auf S. 22, sowie AMD, The Designers' Guide '80 1980, S. 5/1 bis 5/16, insbesondere Table IV auf S. 5–7, Table VII auf S. 5–9 und Table X auf S. 5–12.

Es sind mehrere Paritätbiterzeuger PG1...PG6 angebracht, die z.B. jeweils durch die käuflichen Bausteine SN74S280N, z.B. hergestellt von Texas Instruments, realisiert sind. Den Eingängen des Paritätbiterzeugers wird jeweils ein solcher Abschnitt zur Erzeugung des zugehörenden Paritätbits zugeleitet, so dass jede Bitstelle-Speicherzelle des Speicherwortes Infin, Infout jeweils mit einem Eingang mehrerer Paritätbiterzeuger PGX verbunden ist, wobei die verschiedenen so erzeugten Paritätbits untereinander nachträglich in für sich bekannter Weise verknüpft werden können, z.B. mittels EXCLUSIV-ODER-Gliedern. Diese Paritätbiterzeuger PG1...PG6 erzeugen damit also abschnittsweise aus den in je einer Speicherwortbit-Speicherzelle zwischengespeicherten Bits des hier 16stelligen Speicherwortes Infin, Infout jeweils ein Paritätbit.

Die Adresse Adr wird, wie noch genauer erläutert werden wird, ebenfalls gesichert, indem, aus den in je einer Adressbit-Speicherzelle zwischengespeicherten Bits der Adresse – und zwar bei den Fig. 1 und 2 erläuterten Beispielen – wieder durch die Paritätbiterzeuger PG1...PG6, die Paritätbits der Adresse PBadr z.B. nach dem in Fig. 2 gezeigten Schema ermittelt werden.

Dann wird gemäss Fig. 1 beim Einschreiben des Speicherwortes Infin die gesamte Summe der aus der Adresse Adr und dem Speicherwort Infin erzeugten Paritätbits PBin in besonderen Speicherplätzen des Speichers Mem, die jeweils jedem Speicherwort Infin zugeordnet sind, gespeichert.

Beim Lesen des Speicherwortes Infout wird sowohl die Adresse Adr als auch das Speicherwort Infout überprüft, vor allem um Fehler beim Einschreiben, Speichern und Lesen zu erfassen. Dazu kann, vgl. Fig. 1 und 2, beim Lesen nach dem gleichen Code wie beim Einschreiben geprüft werden. Es werden dazu also z.B. mittels der Paritätbiterzeugung PG1...PG6 wieder die Paritätbits PBadr der Adern Adr erzeugt (Infin liegt zu dieser Zeit nicht an, bzw. die betreffenden Eingänge der Paritätbiterzeugung können, z.B. mittels Schalter, totgelegt werden). Dadurch werden beim Lesen, aus den Bits der Adresse Adr durch die Paritätbiterzeugung PG1...PG6, nun die Paritätbits der Adresse PBadr ermittelt. Beim Lesen des Speicherwortes Infout können demnach die in den betreffenden besonderen Speicherplätzen gespeicherten Paritätbits PBout, zusammen mit der jeweiligen Adresse Adr und/oder zusammen mit der aus dieser Adresse Adr z.B. gemäss Fig. 1 ermittelten Paritätbits PBadr, einer Fehlerermittlungs- und -korrekturschaltung EDC zugeleitet werden. Diese Schaltung EDC kann z.B. durch den käuflichen Baustein Am2960, hergestellt z.B. von Advanced Micro Devices = AMD, realisiert werden, vgl. die beiden oben genannten Druckschriften von AMD.

Diese Fehlerermittlungs- und -korrekturschaltung EDC überprüft dann nach dem Lesen ihrerseits die Adresse Adr auf Richtigkeit, ebenso das gelesene Speicherwort Infout z.B. nach einem SEC-DED-Verfahren, bevorzugt allein mittels der aus den Paritätbits PBadr, BPout gebildeten Syndromen. Danach liefert die Schaltung EDC das geprüfte Speicherwort Infout als Infcorr, bei korrigierbarem fehlerhaftem Speicherwort Infout liefert sie das korrigierte Speicherwort Infcorr. Die Fehlerermittlungs- und -korrekturschaltung EDC korrigiert also zumindest die aus dem Syndrom jeweils abgeleiteten Einfachfehler der Speicherworte Infout wenn nicht sogar in Sonderfällen auch noch Mehrfachfehler des Speicherwortes Infout. Aus einem aus dem Syndrom abgeleiteten Fehler der Adresse Adr jedoch sowie aus weiteren, aus dem Syndrom abgeleiteten Mehrfachfehlern des Speicherwortes Infout bildet aber die Schaltung EDC ein Alarmsignal und/oder löst eine Wiederholung des Lesens aus.

Bei der Erfindung wird auch die Adresse Adr abschnittsweise durch Paritätbits gesichert, also de facto so, dass jede Bitstelle der Adresse Adr jeweils in mehreren sich überlappenden, jeweils für sich durch Paritätbildung überprüften Abschnitten der Adresse Adr enthalten ist, – wobei jeder Abschnitt der Adresse Adr in der Regel nur eine, z.B. durch eine Maske gebildete, Untermenge der Bitstellen der Adresse Adr erfasst, vgl. die Verdrahtungsvorschrift gemäss Fig. 2. Eine wichtige Besonderheit der Erfindung besteht darin, dass die Anzahl der – mit jeweils einem ihrer Eingänge mit der Adressbit-Speicherzelle für eine Bitstelle der Adresse Adr verbundenen – Paritätbiterzeuger, vgl. PG1...PG6, jeweils geradzahlig ist. Dadurch ist auch die Anzahl der diese betreffende Bitstelle der Adresse Adr enthaltenden Abschnitte der Adresse jeweils endlich und geradzahlig – vgl. das in Fig. 2 gezeigte Beispiel, worin jede Bitstelle der Adresse Adr jeweils zu zwei Abschnitten gehört. Die Anzahl der – jeweils mit einem ihrer Eingänge mit der Speicherwortbit-Speicherzelle für eine Bitstelle des Speicherwortes Infin, Infout verbundenen – Paritätbitgeneratoren, vgl. wieder PG1...PG6, ist aber jeweils ungeradzahlig, wodurch die Anzahl der die betreffende Bitstelle des Speicherwortes Infin, Infout enthaltenden Abschnitte jeweils endlich und ungeradzahlig ist. Vgl. damit wieder das in Fig. 2 gezeigte Beispiel, worin jede Bitstelle des Speicherwortes Infin, Infout jeweils zu drei Abschnitten gehört.

Falls ein Speicherwort Infout unter einer fehlerhaften Adresse Adr gelesen wird, dann passen die gelesenen Paritätbits, ähnlich wie bei Speicherwortfehlern, nahezu nie zu den aus der jeweiligen Adresse Adr und dem gelesenen Speicherwort Infout nach dem Lesen neu gebildeten Paritätbits und es entstehen Syndrome. Weil bei der Erfindung die Anzahl der Abschnitte, zu denen eine fehlerhafte Bitstelle der Adresse Adr gehört, stets geradzahlig ist, vgl. Fig. 2, können auch bei Adressmehrfachfehlern, also bei Adressen Adr mit mehreren fehlerhaften Bits, nur geradzahlige Syndrommuster entstehen, also Muster der nicht übereinstimmenden Stellen der gespeicherten und der neu gebildeten Paritätbits – anders als beim Stand der Technik gemäss DE-PS 26 55 653. Geradzahlige Syndrommuster führen dazu, dass diese Adressfehler, ebenso wie ein Adressfehler mit nur einem einzigen fehlerhaften Bit, als ein nicht korrigierbarer Fehler entsprechend zuverlässig erkennbar ist. Im Gegensatz dazu entstehen bei den Speicherworteinfachfehlern ungeradzahlige Syndrommuster, die eine Korrektur auslösen. Durch die Erfindung wird also vermieden, dass ein einfacher oder mehrfacher Fehler in der Adresse Adr einen korrigierbaren Speicherwortfehler vortäuscht. Da die Verfälschung mehrerer Adressbits immer geradzahlige Syndrommuster erzeugt, können auch solche Adressfehler in den meisten Fällen, spontan nach dem Lesen unter der falschen Adresse, erkannt werden. Wenn keine zusätzlichen Speicherwortfehler auftreten, werden solche Adressfehler nur dann nicht erkannt und alarmiert, wenn das resultierende Syndrommuster null Syndrome enthält, was sehr selten der Fall ist.

Man kann die Verdrahtungen, vgl. Fig. 2, damit die Zuordnung von Adressbits zu Abschnitten, so auslegen, dass die Erkennungsunsicherheit von Adressmehrfachfehlern besonders klein ist. Bei einer Verdrahtung gemäss Fig. 2 als Beispiel werden nur 15 von 511 möglichen solchen Verfälschungen der niederwertigsten 9 Adressbits nicht als Fehler erkannt. Bei einer Speichersteueranordnung gemäss DE-PS 26 55 653 werden hingegen 255 von 511 solchen Verfälschungen nicht erkannt, also etwa die Hälfte dieser Fälle.

Zusätzliche Paritätbiterzeuger, vgl. PG1, die nur die Parität der Adresse oder die Parität eines Adressabschnittes erzeugen, können bei der Erfindung vermieden werden. Der Aufwand an Paritätbiterzeugern, d.h. ihre Anzahl, vgl. PG1...PG6, kann nämlich gleich gross wie bei alleiniger Fehlerüberprüfung des Speicherwortes Infin, Infout dadurch gemessen werden, dass jeder Adress-Paritätbiterzeuger nicht nur aus einem Abschnitt der Adresse Adr, vgl. Fig. 2, sondern auch aus einem Abschnitt des Speicherwortes Infin, Infout ein diesen beiden Abschnitten gemeinsames Paritätbit K0...K5=PBin erzeugt. Zur Erzeugung der Adress-Paritäten aus den Adressabschnitten können also jene Paritätbiterzeuger mitverwendet werden, die ohnehin schon zur Sicherung der jeweiligen Speicherworte Infin, Infout verwendet werden. Da dann die ohnehin schon vorhandenen Paritätbiterzeuger, vgl. PG1...PG6, mitverwendet werden, ist für diese Weiterbildung der Erfindung kein zusätzlicher Speicherplatzbedarf für Paritätbits der Adresse erforderlich. Der Aufwand für Paritätbiterzeuger ist auch schon dann gering, wenn die maximale Anzahl der Abschnitte, in denen eine Bitstelle der Adresse Adr enthalten ist, kleiner ist als die kleinste Anzahl der Abschnitte, in denen eine Bitstelle des Speicherwortes Infin, Infout enthalten ist. Besonders zuverlässig ist eine Weiterbildung gesichert, vgl. Fig. 2, wenn die Anzahl der Abschnitte, in denen eine Bitstelle der Adresse Adr enthalten ist, stets zwei ist, wenn die Anzahl der Abschnitte, in denen eine Bitstelle des Speicherwortes Infin, Infout enthalten ist, stets drei ist, und wenn aber die Anzahl der Paritätbitstellen grösser als drei, z.B. sechs, ist. In diesem Falle ist mit der in Fig. 2 gezeigten Verdrahtungsvorschrift trotzdem noch ein SEC-DED-Verfahren, z.B. mittels des ED-Bausteines Am2960, möglich, um Einfachfehler des Speicherwortes korrigieren zu können. Besonders dann, wenn aus den – beim Lesen des Speicherwortes Infout mitausgelesenen, in den betreffenden besonderen Speicherplätzen gespeicherten Paritätbits PBout-mittels EXLUSIV-ODER-Verknüpfungen, vgl. Mixdown, die jeweiligen Adress-Paritätbits PBadr eliminiert werden, bevor die dadurch erhaltenen Speicherwort-Paritätbits PBinf der SEC-DED-Fehlerermittlungs- und -korrekturschaltung EDC zusammen mit dem ausgelesenen Speicherwort Infout zugeleitet werden, kann die Schaltung EDC durch einen käuflichen Baustein realisiert werden. In diesem Falle braucht man nämlich zur Überprüfung des gelesenen Speicherwortes Infout keine spezielle, an die Erfindung angepasste Schaltung EDC, da die Paritätbits PBinf keine Verknüpfung bzw. keine Überlagerung mehr mit den aus der Adresse Adr ermittelten Paritäten enthalten, wenn die Adresse fehlerfrei war. Die Paritätbits PBinf entsprechen dann ja nur mehr alleine dem Bitmuster des jeweiligen Speicherwortes Infout bzw. Infin. Adressfehler äussern sich aber bei dieser Weiterbildung trotzdem noch wie geradzahlige Mehrfachfehler des Speicherwortes Infout, so dass die Schaltung EDC bei Adresseinfach- und -mehrfachfehlern wie auf einen Speicherwortzweifachfehler mit Alarm und/oder mit der Auslösung der Wiederholung des letzten Lesevorganges reagiert. Da auch die EXKLUSIV-ODER-Verknüpfung mittels käuflicher Bausteine realisierbar sind, kann also die ganze, in Fig. 1 gezeigte Weiterbildung, trotz ihrer erfindungsgemässen Verdrahtung gemäss z.B. Fig. 2, im wesentlichen aus käuflichen Bausteinen, demnach entsprechend sehr preiswert ohne grosse Sonderentwicklung von Sonderbausteinen realisiert werden.

Überdies gibt es – sogar käufliche – Schaltungen EDC, z.B. den bereits genannten Baustein Am2960, die in sich bereits eigene Paritätbiterzeuger von solcher Verschaltungsart und (einstellbarer) Betriebsart enthalten, dass die Eingänge und Ausgänge dieser eigenen Paritätbiterzeuger über die Pins der Bausteine dann so unmittelbar von aussen zugänglich sind, dass diese EDC-Bausteine dann auch, für sich betrachtet, als Paritätbiterzeuger verwendbar sind. Solche EDC-Bausteine ermöglichen es, separate Paritätbiterzeuger, vgl. PG1...PG6 in Fig. 1, – zumindest zum Teil – wegzulassen, indem die eigenen Paritätbiterzeuger dieser EDC-Bausteine zur Erzeugung der Paritätbits, z.B. PBin und/oder PBadr mitausgenutzt werden. Zum Beispiel kann man dann aber auch trotzdem noch separate Paritätbiterzeuger PG1...PG6, aber mit dann geringerer Anzahl von Eingängen, anbringen, um damit nur noch die Paritätbits PBadr zu erzeugen, da die Paritätbits PBin vom EDC-Baustein erzeugt werden.

## Patentansprüche

1. Speichersteueranordnung (Fig. 1) – insbesondere für ein fehlertolerantes Fernsprech-Vermittlungssystem –, zur Feststellung der Fehlerfreiheit der Adresse (Adr) und, nach Möglichkeit, zur Korrektur des Speicherwortes (Infout) beim Lesen dieses Speicherwortes (Infout) aus einem Speicher (Mem), wobei
– ein Abschnitt eines aus Digits bzw. Bits zusammengesetztes Wortes (Infin) in der Regel jeweils nur eine, z.B. durch eine Maske gebildete, Untermenge der Digitstellen dieses Wortes (Infin) erfasst,
– das Speicherwort (Infin, Infout) abschnittsweise, z.B. nach einem SEC-DED-Verfahren, durch Paritätdigits (PBinf) gesichert ist, indem jede Digitstelle des Speicherwortes (Infin, Infout) jeweils in mehreren sich überlappenden Abschnitten des Speicherwortes enthalten ist (Fig. 2), und indem mehrere Paritätdigitserzeuger (PG1...PG6) vorhanden sind, die abschnittsweise aus, in je einer Speicherwortdigit-Speicherzelle zwischengespeicherten Digits des Speicherwortes (Infin, Infout) jeweils ein Paritätdigit erzeugen,
– die Anzahl der – jeweils mit einem ihrer Eingänge mit der Speicherwortdigit-Speicherzelle für eine Digitstelle des Speicherwortes (Infin, Infout) verbundenen – Paritätdigitserzeuger (PG1...PG6), und damit die Anzahl der – die betreffende Digitstelle des Speicherwortes (Infin, Infout) enthaltenden – Abschnitte jeweils endlich und ungeradzahlig ist,
– die Adresse ebenfalls gesichert ist, indem jeweils aus, in je einer Adressdigit-Speicherzelle zwischengespeicherten, Digits von einzelnen Abschnitten der Adresse durch Paritätdigterzeugung (PG1...PG6) die Parität (PBadr) der einzelnen Abschnitte ermittelt wird,
– beim Einschreiben des Speicherwortes (Infin) die aus der Adresse (Adr) und dem Speicherwort (Infin) erzeugten Paritätdigits (PBin) in besonderen Speicherplätzen des Speichers (Mem), die jeweils jedem Speicherwort (Infin) zugeordnet sind, gespeichert werden,
– beim Lesen des Speicherwortes (Infout) die in den betreffenden besonderen Speicherplätzen gespeicherten Paritätdigits (PBout), zusammen mit der jeweiligen Adresse (Adr) und/oder der aus dieser Adresse (Adr) ermittelten Paritätdigits (PBadr), einer Fehlerermittlungs- und -korrekturschaltung (EDC) zugeleitet werden, welche (EDC) ihrerseits die zum Lesen benutzte Adresse (Adr) auf Richtigkeit überprüft und welche auch das ausgelesene Speicherwort (Infout), z.B. nach einem SEC-DED-Verfahren, mittels aus den Paritätdigits (PBadr, BPout) gebildeten Syndromen auf Richtigkeit überprüft und bei Fehlerhaftigkeit des gelesenen Speicherwortes (Infout) nach Möglichkeit korrigiert, indem zumindest
– in der Fehlerermittlungs- und Korrekturschaltung (EDC) aus dem Syndrom abgeleitete Einfachfehler der Speicherworte (Infout) jeweils korrigiert werden,
– aber aus dem Syndrom abgeleitete Fehler der Adresse (Adr) sowie aus dem Syndrom abgeleitete Mehrfachfehler des Speicherwortes (Infout) einen Alarm und/oder eine Wiederholung des Lesens auslösen, dadurch gekennzeichnet, dass
– auch die Adresse (Adr) abschnittsweise durch Paritätdigits so gesichert sind, dass jede Digitstelle der Adresse (Adr) jeweils in mehreren, sich überlappenden, jeweils für sich durch Paritätbildung überprüften Abschnitten der Adresse (Adr) enthalten ist,
– jeder Abschnitt der Adresse (Adr) in der Regel nur eine, z.B. durch eine Maske gebildete, Untermenge der Digitstellen der Adresse (Adr) erfasst (Fig. 2), und
– die Anzahl der – mit jeweils einem ihrer Eingänge mit der Adressdigit-Speicherzelle für eine Digitstelle der Adresse (Adr) verbundenen – Paritätdigitserzeuger (PG1...PG6), und damit die Anzahl der – diese betreffende Digitstelle der Adresse (Adr) enthaltenen – Abschnitte jeweils endlich und geradzahlig ist.

2. Speichersteueranordnung nach Patentanspruch 1, dadurch gekennzeichnet, dass

– jeder, aus einem Abschnitt der Adresse (adr) ein Paritätdigit (PBadr) erzeugende, Paritätdigiterzeuger (PG1...PG6) zugleich aus einem Abschnitt des Speicherwortes (Infin, Infout) ein diesen beiden Abschnitten gemeinsames Paritätdigit (PBin) erzeugt.

3. Speichersteueranordnung nach Patentanspruch 1 oder 2, dadurch gekennzeichnet, dass
– die maximale Anzahl der Abschnitte, in denen eine Digitstelle der Adresse (Adr) enthalten ist, kleiner ist als die kleinste Anzahl der Abschnitte, in denen eine Digitstelle des Speicherwortes (Infin, Infout) enthalten ist.

4. Speichersteueranordnung nach Patentanspruch 3, dadurch gekennzeichnet, dass
– die Anzahl der Abschnitte, in denen eine Bitstelle der Adresse (Adr) enthalten ist, stets zwei ist,
– die Anzahl der Abschnitte, in denen eine Bitstelle des Speicherwortes (Infin, Infout) enthalten ist, stets drei ist,
– aber die Anzahl der Paritätbitstellen grösser als drei, z.B. sechs, ist (Fig. 2).

5. Speichersteueranordnung nach einem der vorhergehenden Patentansprüche, dadurch gekennzeichnet, dass
– aus den, beim Lesen des Speicherwortes (Infout) aus den betreffenden besonderen Speicherplätzen gelesenen, Paritätdigits (PBout) mittels EXKLUSIV-ODER-Verknüpfungen (Mixdown) die jeweiligen Adress-Paritätdigits (PBadr) eleminiert werden, und die dadurch erhaltenen Speicherwort-Paritätdigits (PBinf) der SEC-DED-Fehlerermittlungs- und -korrekturschaltung (EDC) zusammen mit dem gelesenen Speicherwort (Infout) zugeleitet werden.

## Claims

1. A store control arrangement (Fig. 1) – in particular for an error-tolerant telephone exchange system – for determining the freedom from errors of the address (Adr) and, if possible, for correcting the stored word (Infout) when this stored word (Infout) is read-out from a store (Mem) where
– a section of a word (Infin), composed of digits or bits, generally comprises only a sub-quantity, formed for example by a mask, of the digit positions of this work (Infin),
– the stored word (Infin, Infout) is protected section by section, e.g. in accordance with an SEC-DED-method, by means of parity digits (PBinf) in that each digit position of the stored word (Infin, Infout) is contained in a plurality of overlapping sections of the stored word (Fig. 2) and in that a plurality of parity digit generators (PG1...PG6) are provided which each generate a parity digit, section by section, from digits, intermediately stored in a stored word digit storage cell, of the stored word (Infin, Infout),
– the number of parity digit generators (PG1...PG6), which are each connected by one of their inputs to the stored word digit storage cell for a digit position of the stored word (Infin, Infout), and thus the number of sections which contain the respective digit position of the stored word (Infin, Infout) is in each case finite and odd-numbered,
– the address is likewise protected in that from digits, intermediately stored in a respective address digit storage cell, of individual sections of the address the parity (PBadr) of the individual sections is determined by parity digit generators (PG1...PG6),
– at the time of the input of the stored word (Infin) the parity digits (PBin), produced from the address (Adr) and the stored word (Infin), are stored in special storage locations of the store (Mem) assigned to each stored word (Infin),
– at the time of the read-out of the stored word (Infout) the parity digits (PBout), stored in the respective special storage locations, are supplied, together with the respective address (Adr) and/or the parity digits (PBadr) determined from this address (Adr), to an error determining and correcting circuit (EDC) which (EDC) itself checks the correctness of the address (Adr) used for read-out, and which also checks the correctness of the read-out stored word (Infout), e.g. in accordance with an SEC-DED-method by means of syndromes formed the parity digits (PBadr, PBout) and, in the event that the read-out stored word (Infout) contains an error, if possible corrects this error, in that at least
– in the error determining and correcting circuit (EDC) single errors in the stored words (Infout), derived from the syndrome are in each case corrected,
– but errors in the address (Adr) derived from the syndrome and multiple errors in the stored word (Infout) derived from the syndrome trigger an alarm and/or a repetition of the read-out procedure, caracterised in that
– the address (Adr) is also protected section by section by means of parity digits in such manner that each digit position of the address (Adr) is contained in a plurality of overlapping sections of the address (Adr) which are each checked independently by parity formation,
– each section of the address (Adr) generally comprises only a sub-quantity, formed for example by a mask, of the digit positions of the address (Adr) (Fig. 2) and
– the number of parity digit generators (PG1...PG6), which are each connected by one of their inputs to the address digit storage cell for a digit position of the address (Adr), and thus the number of sections containing this respective digit position of the address (Adr) – is in each case finite and even-numbered.

2. A store control arrangement as claimed in patent claim 1, characterised in that
– each parity digit generator (PG1...PG6) which generates a parity digit (PBadr) from a section of the address (adr) simultaneously generates from a section of the stored word (Infin, Infout) a parity digit (PBin) which is common to these two sections.

3. A store control arrangement as claimed in patent claims 1 or 2, characterised in that
- the maximum number of sections in which a digit position of the address (Adr) is contained is smaller than the smallest number of sections in which a digit position of the stored word (Infin, Infout) is contained.

4. A store control arrangement as claimed in patent claim 3, characterised in that
- the number of sections in which a bit position of the address (adr) is contained is always two,
- the number of sections in which a bit position of the stored word (Infin, Infout) is contained is always three,
- but the number of parity bit positions exceeds three, e.g. is six (Fig. 2).

5. A store control arrangement as claimed in one of the preceding patent claims, characterised in that
- the respective address parity digits (PBadr) are eliminated by EXCLUSIVE-OR logic links (Mixdown) from the parity digits (PBout) read out from the respective special storage locations at the time of the read-out of the stored word (Infout), and that the stored word parity digits (PBinf) obtained in this way are supplied to the SEC-DED error determining and correcting circuit (EDC) together with the read-out stored word (Infout).

## Revendications

1. Dispositif de commande de mémoire (figure 1) – notamment pour un système de commutation téléphonique tolérant des erreurs – pour la détermination de l'absence d'erreurs de l'adresse (Adr) et, éventuellement, pour la correction du mot de mémoire (Infout), lors de la lecture de ce mot de mémoire (Infout) hors d'une mémoire (Mem), et dans lequel
- une section d'un mot (Infin) formée par la réunion de chiffres ou de bits, en général seulement une quantité partielle, formée par exemple par un masque, des chiffres de ce mot (Infin) est détectée,
- le mot de mémoire (Infin, Infout) est protégé, par sections, par exemple conformément à un procédé SEC-DED, par des chiffres de parité (PBinf), par le fait que chaque chiffre du mot de mémoire (Infin, Infout) est contenu respectivement dans plusieurs sections en chevauchement du mot de mémoire (figure 2), et par le fait qu'il est prévu plusieurs générateurs de chiffres de parité (PG1...PG6), qui produisent, par sections, à partir de chiffres d'un mot de mémoire (Infin, Infout) mémorisés temporairement dans une cellule respective de mémoire des chiffres du mot de mémoire, un chiffre respectif de parité,
- le nombre des générateurs de chiffres de parité (PG1...PG6) -reliés respectivement par une de leurs entrées à la cellule de mémoire de chiffres de mots de mémoire pour une position de chiffre du mot de mémoire (Infin, Infout) – et par conséquent le nombre des sections – contenant la position de chiffre considérée du mot de mémoire (Infin, Infout) – sont respectivement finis et impairs,
- l'adresse est également protégée par le fait qu'à partir de chiffres, mémorisés temporairement dans des cellules respectives de mémoire contenant des chiffres de l'adresse, de sections individuelles de l'adresse, la parité (PBadr) des différentes sections est déterminée par la production (PG1...PG6) de chiffres de parité,
- lors de l'enregistrement du mot de mémoire (Infin), les chiffres de parité (Pbin) produits à partir de l'adresse (Adr) et du mot de mémoire (Infin), sont mémorisés en des emplacements particuliers de la mémoire (Mem), qui sont associés respectivement à chaque mot de mémoire (Infin),
- lors de la lecture du mot de mémoire (Infout), les chiffres de parité (Pbout) mémorisés dans les cases de mémoire particulières considérées sont envoyés, ainsi que l'adresse respective (Ad0) et/ou les chiffres de parité (Pbadr) déterminés à partir de cette adresse (Adr), à un circuit (EDC) de détermination et de correction d'erreurs, qui (ADC) contrôle pour sa part si l'adresse (Adr) utilisée pour la lecture est correcte et vérifie également si le mot de mémoire lu (Infout), par exemple après un procédé SEC-DED, est correct, au moyen de syndromes formés à partir des chiffres de parité (PBadr, BPout) et réalise éventuellement une correction dans le cas où le mot de mémoire lu (Infout) est erroné, par le fait qu'au moins
- des erreurs simples des mots de mémoire (Infout), dérivées du syndrome, sont corrigées respectivement dans le circuit (EDC) de détermination d'une correction d'erreurs,
- mais des erreurs, dérivées du syndrome, de l'adresse (Adr) ainsi que des erreurs multiples, dérivées de syndrome, du mot de mémoire (Infout) déclenchent une alarme et/ou une répétition de la lecture, caractérisé par le fait que
- l'adresse (Adr) est également protégée, par sections, par des chiffres de parité de telle sorte que chaque position de chiffre dans l'adresse (Adr) est contenue respectivement dans plusieurs sections de l'adresse (Adr), qui se chevauchent et sont contrôlées respectivement en soi par formation de la parité,
- chaque section de l'adresse (Adr) détecte en général uniquement une quantité partielle, formée par exemple par un masque, des positions de chiffres de l'adresse (Adr) (figure 2), et
- le nombre des générateurs (PG1...PG6) de chiffres de parité – reliés respectivement par l'une de leurs entrées à la cellule de mémoire de chiffres d'adresse pour une position de chiffre de l'adresse (Adr) – et par conséquent le nombre des sections – contenant cette position de chiffre considérée de l'adresse (Adr) – sont respectivement finis et pairs.

2. Dispositif de commande de mémoire suivant la revendication 1, caractérisé par le fait que
- chaque générateur de chiffres de parité (PG1...PG6), qui produit un chiffre de parité (PBadr) à partir d'une section d'adresse (Adr), produit simultanément, à partir d'une section du mot de mémoire (Infin, Infout), un chiffre de parité (PBin) commun aux deux sections.

3. Dispositif de commande de mémoire suivant la revendication 1 ou 2, caractérisé par le fait que

– le nombre maximum des sections, qui contiennent une position de chiffre de l'adresse (Adr), est inférieur au nombre minimum des sections, qui contiennent une position de chiffre du mot de mémoire (Infin, Infout).

4. Dispositif de commande de mémoire suivant la revendication 3, caractérisé par le fait que
– le nombre des sections, qui contiennent une position binaire de l'adresse (Adr), est toujours égal à deux,

– le nombre des sections, qui contiennent une position binaire du mot de mémoire (Infin, Infout), est toujours égal à trois,

– mais le nombre des positions de bits de parité est supérieur à trois et par exemple égal à six (figure 2).

5. Dispositif de commande de mémoire suivant l'une des revendications précédentes, caractérisé par le fait que
– les chiffres respectifs de parité d'adresses (PBadr) sont éliminés, au moyen de combinaisons OU-EXCLUSIF (Mixdown), des chiffres de parité (BPout) lus à partir des cases de mémoire particulières considérées lors de la lecture du mot de mémoire (Infout), et les chiffres de parité (PBinf) du mot de mémoire, obtenus de ce fait sont envoyés au circuit (EDC) de détermination et de correction d'erreurs SEC-DED, ainsi que le mot de mémoire lu (Infout).

# FIG 1

# FIG 2

| PBin | Adr 1 | 2 | 3 | 4 | 5 | 6 | 7 | 8 | 9 | 10 | 11 | 12 | 13 | 14 | 15 | 16 | 17 | 18 | Infin 0 | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|---|---|---|---|---|---|---|---|---|---|---|---|---|---|---|---|---|---|---|
| K0 | | X | | | X | | | X | X | | | X | | | X | | | | | X | X | X | | X | | | X | X | | X | | | | X | |
| K1 | | | | X | | | X | | | | X | | | X | | | | X | X | X | | X | | X | | X | | X | | X | | | | | |
| K2 | X | X | | X | | | X | | | | X | | | X | | | X | | X | | | X | X | | X | | X | X | | | X | | X | | |
| K3 | X | | | X | | | X | | X | | X | | | X | | | X | | X | X | | | X | X | X | | | | X | X | X | | | | |
| K4 | | X | | | X | | | X | | | | X | | | X | | | X | | | | X | X | X | X | X | | | | | | | | X | X |
| K5 | | | X | | | X | | | X | | | X | | | X | | | | | | | | | | | | | | X | X | X | X | X | X | X |